# EUROPÄISCHE PATENTSCHRIFT

(11) **EP 2 120 657 B1**
(45) Veröffentlichungstag und Bekanntmachung des Hinweises auf die Patenterteilung: **14.05.2014**
(21) Anmeldenummer: 07822716.2
(22) Anmeldetag: 20.11.2007
(51) Int. Cl.: A47J 31/54, F24H 1/14, F24H 9/12

(54) **DURCHLAUFERHITZER UND HEISSGETRÄNKEAUTOMAT UMFASSEND EINEN DURCHLAUFERHITZER**
INSTANTANEOUS WATER HEATER AND AUTOMATIC HOT DRINKS MACHINE COMPRISING AN INSTANTANEOUS WATER HEATER
CHAUFFE-EAU INSTANTANÉ ET APPAREIL AUTOMATIQUE DE PRÉPARATION DE BOISSONS CHAUDES COMPORTANT UN CHAUFFE-EAU INSTANTANÉ

(30) Priorität: 21.12.2006 DE 102006060750
(43) Veröffentlichungstag der Anmeldung: 25.11.2009
(73) Patentinhaber: BSH Bosch und Siemens Hausgeräte GmbH, 81739 München (DE)
(72) Erfinder: EDER, Florian, 83132 Pittenhart (DE); SCHNEIDERBAUER, Gottfried, 84553 Halsbach (DE)
(86) Internationale Anmeldenummer: PCT/EP2007/062536
(87) Internationale Veröffentlichungsnummer: WO 2008/077685

(56) Entgegenhaltungen:
- DE-A1- 2 638 380
- DE-U1- 20 320 703
- FR-A- 1 019 916

## Beschreibung

Die Erfindung betrifft einen pumpen betriebenen, elektrischen Durchlauferhitzer, sowie einen Heißgetränkeautomaten umfassend einen Durchlauferhitzer.

Durchlauferhitzer sind in der Regel fest installierte Vorrichtungen zu Bereitung heißer Flüssigkeiten, insbesondere zur Bereitung von Heißwasser. Im Haushaltsbereich werden Durchlauferhitzer beispielsweise in Spül-, Wasch- oder Kaffeemaschinen eingesetzt. Gattungsgemäße Durchlauferhitzer sind beispielsweise in der FR 1.019.916 und der DE 26 38 380 offenbart.

Üblicherweise besteht ein Durchlauferhitzer aus einem Rohrheizkörper und einem flüssigkeitsführenden Rohr, das einen Zu- und einen Ablauf für eine zu erhitzende Flüssigkeit aufweist.

Der Rohrheizkörper besteht typischerweise aus einem Metallrohr, beispielsweise aus Aluminium oder Edelstahl, in dem ein spiralförmig gewickelter Heizdraht angeordnet ist. Zwischen Heizdraht und Metallrohr befindet sich zur elektrischen Isolation beispielsweise Quarzsand oder Magnesiumoxid. Die Enden des Metallrohres sind mit Keramikelementen verschlossen aus welchen zentrisch ein Metallstift ragt, der in elektrischem Kontakt mit dem jeweiligen Ende des Heizdrahtes steht. Der Rohrheizkörper ist zusammen mit dem flüssigkeitsführenden Rohr in einem Aluminiumblock vergossen oder von außen flächig auf oder spiralförmig um das flüssigkeitsführende Rohr gelötet.

Im Stand der Technik sind pumpen lose Vorrichtungen bekannt, die beispielsweise in klassischen Kaffeemaschinen Verwendung finden, und pumpenbetriebene Vorrichtungen, die in Heißgetränkeautomaten, wie beispielsweise Kaffeevollautomaten und Espressomaschinen eingesetzt werden. In den pumpenbetriebenen Vorrichtungen liegt ein Druck von bis zu 15 bar vor. Dies wird erreicht, indem Wasser aus einem Wasserbehälter oder einer sonstigen Wasserzuführung einer elektromotorisch angetriebenen Pumpe zugeführt wird, die das Wasser dann unter hohem Druck über einen Durchlauferhitzer einer Kaffeemehlaufnahmeeinrichtung zuführt.

Insbesondere bei pumpenbetriebenen Vorrichtungen liegen hohe Heizleistungen auf minimalen Wärmeübertragungsflächen. Hier kann es zu einer laminaren Strömung des Heißwassers innerhalb des flüssigkeitsführenden Rohres kommen. Strömt aber Heißwasser laminar, bildet sich eine Dampfsperrschicht zwischen beheizter Innenmantelfläche des Rohres und Flüssigkeitsstrom aus. Diese Dampfsperrschicht wirkt wärmeisolierend und verhindert damit eine weitere Erhitzung der Flüssigkeit. Der Wirkungsgrad des Durchlauferhitzers ist mangelhaft.

Sowohl bei pumpenlosen wie auch bei pumpenbetriebenen Heißgetränkeautomaten, wächst bei kalkhaltigem Wasser in der Heizeinrichtung eine Kalkschicht an. Durch einen Entkalkungsvorgang oder auch schon durch die schnelle Erhitzung und Abkühlung, beispielsweise während eines Brühvorgangs, werden Teile von dieser Kalkschicht abgelöst und sammeln sich am tiefsten Punkt, beispielsweise im Rohrsystem vor der Heizeinrichtung, an.

Bei pumpenbetriebenen Heißgetränkeautomaten werden zudem Kalkpartikel in das dem Durchlauferhitzer nachgeschaltete Leitungssystem gedrückt. Dieses Leitungssystem weist verschiedene Engstellen, beispielsweise Ventile, Düsen und/oder Verzweigungen, wie T-Stücke auf, die durch Kalkpartikel zugesetzt werden können. Bei leistungsstarken Durchlauferhitzern führt dies zu hohen Dampfdrücken und zum Auslösen von Sicherheitseinrichtungen, beispielsweise einer Übertemperatursicherung. Der Heißgetränkeautomat ist nicht länger funktionsfähig und muß gegebenenfalls zur Reparatur in eine Fachwerkstätte.

Ausgehend von diesem Stand der Technik ist es Aufgabe der vorliegenden Erfindung einen pumpenbetriebenen, elektrischen Durchlauferhitzer mit einem möglichst hohen Wirkungsgrad bereitzustellen. Zudem sollten keine Kalkpartikel in das nachgeschaltete Rohrleitungssystem gespült werden. Aufgabe der vorliegenden Erfindung ist es auch ein Verfahren zur Herstellung eines Durchlauferhitzers bereitzustellen.

Gelöst wird die Aufgabe durch einen pumpenbetriebenen, elektrischen Durchlauferhitzer mit dem Merkmalen des Patentanspruchs 1. Vorteilhafte Ausgestaltungen und Weiterbildungen der Erfindung sind in den Unteransprüchen beschrieben.

Der erfindungsgemäße pumpenbetriebene, elektrische Durchlauferhitzer weist ein erstes, wasserzuführendes Rohrleitungsende mit Durchgangsbohrungen in der Mantelfläche, ein zweites, wasserabführendes Rohrleitungsende mit Durchgangsbohrungen in der Mantelfläche und ein Mantelrohr auf, dessen zumindest mittlerer Abschnitt mit zumindest einem Rohrheizkörper beaufschlagt ist.

Ein erstes Mantelrohrende liegt dichtend an der Außenmantelfläche des ersten Rohrleitungsendes und ein zweites Mantelrohrende liegt dichtend an der Außenmantelfläche des zweiten Rohrleitungsendes an.

Durch Durchgangsbohrungen in der Mantelfläche des ersten, wasserzuführenden Rohrleitungsendes strömt zu erhitzendes Wasser, beispielsweise ein von einem Wassertank eines Kaffeevollautomaten kommendes Wasser, in das das erste Rohrleitungsende umschließende Mantelrohr. Die Durchgangsbohrungen weisen in Richtung der Immenmantelfläche des Mantelrohrs, so dass das in das Mantelrohr einströmende Wasser frontal auf die durch den Rohrheizkörper beheizte Immenmantelfläche auftrifft. Erfindungsgemäß wird dadurch eine laminare Strömung im wasserführenden Mantelrohr und damit die Ausbildung einer Dampfsperrschicht zwischen beheizter Immenmantelfläche des Mantelrohrs und Wasserstrom unterbunden. Vielmehr bildet sich eine turbulente Strömung im Mantelrohr aus.

Die Anzahl, der Durchmesser und die Lage der Durchgangsbohrungen in der Mantelfläche des ersten, wasserzuführenden Rohrleitungsendes sind abhängig von der Verwendung des erfindungsgemäßen Durchlauferhitzers. Wird dieser in einem Heißgetränkeautomaten, wie beispielsweise einem Kaffeevollautomaten verwendet, weist die Mantelfläche 2 bis 12, vorzugsweise 4 bis 8 Durchgangsbohrungen mit einem Durchmesser von zwischen 1 bis 3 mm auf. Die Bohrungen liegen vorzugsweise auf verschiedenen Abschnitten der Mantelfläche des in das Mantelrohr hineinreichenden wasserzuführenden Rohrleitungsendes.

Vorteilhaft wirken sich die orthogonal zur Strömungsrichtung und zur Mantelfläche des Mantelrohrs angeordneten Durchgangsbohrungen auch gegenüber einem unerwünschten Kalkpartikeleintrag in das dem Durchlauferhitzer vorgelagerte Leitungssystem aus. Insbesondere in Kaffeevollautomaten sind die Durchlauferhitzer vertikal stehend bzw. hängend angebracht. Nach dem Abschalten der Pumpe sinken die im Wasser suspendierten Kalkpartikel geradlinig zum tiefsten Punkt im Mantelrohr, so dass kein Partikeleintrag in das wasserzuführende Rohrleitungssystem zu beobachten ist.

Durch Durchgangsbohrungen in der Mantelfläche des zweiten, wasserabführenden Rohrleitungsendes strömt das im Mantelrohr erhitzte Wasser in ein nachgeschaltetes Rohrleitungssystem, beispielsweise in das Leitungssystem eines Kaffeevollautomaten. Die Durchgangsbohrungen sind orthogonal zur Strömungsrichtung des Wassers im Mantelrohr und zur Mantelfläche des Mantelrohrs angeordnet.

Erfindungsgemäß wird dadurch ein unerwünschter Eintrag von dünnen, länglichen Kalkpartikel in das nachgeschaltete Rohrleitungssystem vermieden. Gleichzeitig werden annähernd kugelförmige Partikel, die eine bestimmten Durchmesser nicht überschreiten aus dem erfindungsgemäßen Durchlauferhitzer ausgespült. Der Durchmesser der Durchgangsbohrungen bestimmt dabei die Größe der ausgespülten Partikel.

Die Anzahl, der Durchmesser und die Lage der Durchgangsbohrungen in der Mantelfläche des zweiten, wasserabführenden Rohrleitungsendes ist abhängig von der Verwendung des erfindungsgemäßen Durchlauferhitzers. Vorzugsweise ist der Durchmesser der Bohrungen etwa halb so groß wie der Durchmesser der engsten Stelle in dem nachgelagerten Rohrleitungssystem.

Wird der erfindungsgemäße Durchlauferhitzer in einem Heißgetränkeautomaten, wie beispielsweise einem Kaffeevollautomaten verwendet, weist die Mantelfläche 2 bis 12, vorzugsweise 4 bis 8 Durchgangsbohrungen mit einem Durchmesser von zwischen 1 und 3 mm auf. Weisen die Durchgangsbohrungen in Richtung der Immenmantelfläche des Mantelrohrs wird erfindungsgemäß der Eintrag von langen, dünnen Kalkpartikeln in das nachgelagerte Rohrleitungssystem, die Brühkammer und den Heißwasserauslauf unterbunden, gleichzeitig unschädliche, einen bestimmten Durchmesser nicht überschreitende Partikel ausgespült. Die Bohrungen liegen vorzugsweise auf verschiedenen Abschnitten der Mantelfläche des in das Mantelrohr hineinreichenden, wasserabführenden Rohrleitungsendes. Hierdurch wird vermieden, dass ein großes Kalkstück gleichzeitig alle Durchgangsbohrungen zusetzt. Das Rohrleitungssystem in einem Heißgetränkeautomaten wird nicht durch Kalkpartikel zugesetzt, gleichzeitig wird der Durchlauferhitzer von kleinen Partikeln befreit, so dass dieser zeitverzögert verkalkt.

Eine Ausführungsform des erfindungsgemäßen Durchlauferhitzers ist dadurch herstellbar, dass ein wasserzuführendes Rohrleitungsende, beispielsweise aus Polyamid oder Polyphtalamid, in ein erstes Mantelrohrende und ein wasserabführendes Rohrleitungsende, beispielsweise aus Polyamid oder Polyphtalamid, in ein zweites Mantelrohrende eines Mantelrohrs eingeschoben wird. Ein Abschnitt des Außenmantels der Rohrleitungsenden wird mit einem Dichtmittel beaufschlagt, beispielsweise einem O-Ring, das am Innenmantel des Mantelrohrs formschlüssig anliegt.

Die beiden Rohrleitungsenden laufen konisch zu und weisen auf den Mantelflächen Durchgangsbohrungen auf. Die Stirnseiten der beiden Rohrleitungsenden werden wasserdicht ausgeführt, beispielsweise verpresst oder verklebt.

Insbesondere für die Verwendung in einem Heißgetränkeautomaten ist der erfindungsgemäße Durchlauferhitzer dadurch herstellbar, dass in ein als Heizungsrohr ausgebildbares Mantelrohr, typischerweise ein Vierkantrohr aus Aluminium oder Edelstahl, eine im Durchmesser kleinere Rohrleitung eingeschoben wird, und dichtend, vorzugsweise stoffschlüssig mit den beiden Mantelrohrenden verbunden, beispielsweise verschweißt oder verlötet wird.

Der von dem Mantelrohr umschlossene Bereich der Rohrleitung wurde zuvor in einem mittleren Abschnitt wasserdicht verpresst und an den beiden Endabschnitten mit Durchgangsbohrungen versehen. Die Endabschnitte weisen in dieser Ausführungsform den ursprünglichen Rohrleitungsdurchmesser auf und laufen konisch auf den verpressten mittleren Abschnitt zu.

In einer anderen Ausführungsform des erfindungsgemäßen Durchlauferhitzers wurde der mittlere Abschnitt wasserdicht verpresst und Teilabschnitte der beiden Endabschnitte einfach halbverpresst, dergestalt, dass sie ausgehend von dem ursprünglichen Rohrleitungsdurchmesser stufenweise konisch auf den verpressten mittleren Bereich der Rohrleitung zulaufen.

Mantelrohr und Rohrleitung sind vorzugsweise aus Metall, bevorzugt ist das Mantelrohr aus Aluminium und die Rohrleitung aus Edelstahl.

Die vorliegende Erfindung wird nachstehend anhand von Figuren näher erläutert. Im einzelnen zeigen schematisch:
- Fig.1: einen Querschnitt einer Ausführungsform des erfindungsgemäßen Durchlauferhitzer
- Fig.2: einen Querschnitt einer weiteren Ausführungsform des erfindungsgemäßen Durchlauferhitzer
- Fig.3: einen Querschnitt einer noch weiteren Ausführungsform des erfindungsgemäßen Durchlauferhitzers

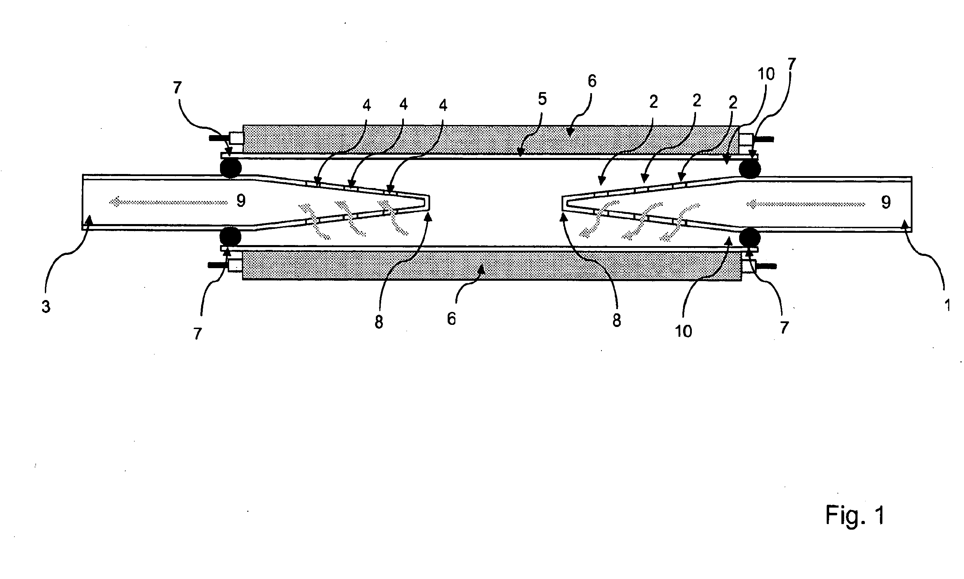

Fig.1 zeigt einen Querschnitt einer Ausführungsform des erfindungsgemäßen Durchlauferhitzers mit einem ersten, wasserzuführenden Rohrleitungsende (1) mit Durchgangsbohrungen (2) in der Mantelfläche, einem zweiten, wasserabführenden Rohrleitungsende (3) mit Durchgangsbohrungen (4) in der Mantelfläche und einem Mantelrohr (5). Das Mantelrohr (5) ist mit zwei Rohrheizkörpem (6) beaufschlagt. Ein Abschnitt des Außenmantels der Rohrleitungsenden weist einen O-Ring (7) auf, der am Innenmantel des Mantelrohrs formschlüssig anliegt. Die beiden konisch zulaufenden Rohrleitungsenden (1, 3) mit den Durchgangsbohrungen (2, 4) sind aus einem geeigneten Polyamid. Die Stirnseiten (8) sind wasserdicht ausgeführt. Die Pfeile (9) deuten die Strömungsrichtung des Wassers an. Durch die in Richtung der Immenmantelfläche des Mantelrohrs (5) weisenden Durchgangsbohrungen (2) strömt zu erhitzendes Wasser in das Mantelrohr (5). Das einströmende Wasser trifft dabei frontal auf die durch die Rohrheizkörper (6) beheizte Innenmantelfläche. Durch die orthogonal zur Strömungsrichtung des Wassers und zur Mantelfläche des Mantelrohrs (5) angeordneten Durchgangsbohrungen (4) strömt das erhitzte Wasser in das nachfolgende Rohrleitungssystem, beispielsweise in das Leitungssystem eines Kaffeevollautomaten.

Ist der erfindungsgemäße Durchlauferhitzer vertikal stehend oder hängend angebracht sinken nach dem Abschalten der Pumpe die im Wasser suspendierten Kalkpartikel geradlinig zum tiefsten Punkt (10) im Mantelrohr, wodurch ein Partikeleintrag in das wasserzuführende Rohrleitungssystem vermieden wird.

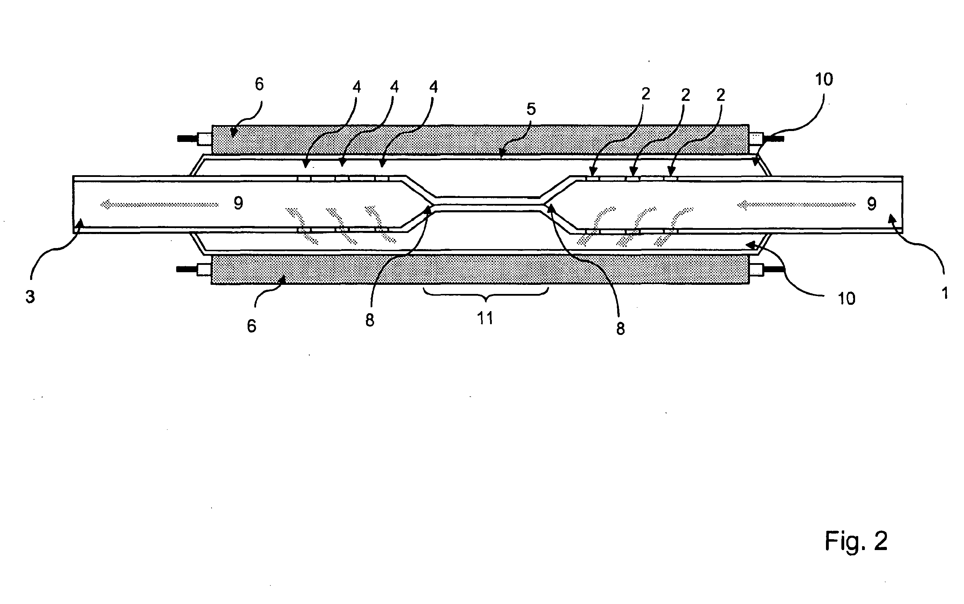

Fig.2 zeigt einen Querschnitt einer weiteren Ausführungsform des erfindungsgemäßen Durchlauferhitzers mit einem Mantelrohr (5) aus Aluminium und eine im Durchmesser kleinere Rohrleitung aus, vorzugsweise Edelstahl, mit einem wasserzuführenden Rohrleitungsende (1) mit Durchgangsbohrungen (2) und einem wasserabführenden Rohrleitungsende (3) mit Durchgangsbohrungen (4). Das Mantelrohr (5) ist mit zwei Rohrheizkörpern (6) beaufschlagt. Die beiden Mantelrohrenden laufen konisch zu und sind mit einem Abschnitt des Außenmantels der Rohrleitungsenden (1, 3) stoffschlüssig verbunden. Die Stirnseiten (8) sind wasserdicht ausgeführt, dadurch dass die Rohrleitung in einem mittleren Abschnitt (11) wasserdicht verpresst wurde. Die Pfeile (9) deuten die Strömungsrichtung des Wassers an. Durch die in Richtung der Immenmantelfläche des Mantelrohrs (5) weisenden Durchgangsbohrungen (2) strömt zu erhitzendes Wasser in das Mantelrohr (5). Durch die orthogonal zur Strömungsrichtung des Wassers und zur Mantelfläche des Mantelrohrs (5) angeordneten Durchgangsbohrungen (4) strömt das erhitzte Wasser in das nachfolgende Rohrleitungssystem. Nach dem Abschalten der Pumpe sinken in einem vertikal stehenden bzw. hängenden angebrachten Durchlauferhitzer die im Wasser suspendierten Kalkpartikel geradlinig zum tiefsten Punkt (10) im Mantelrohr.

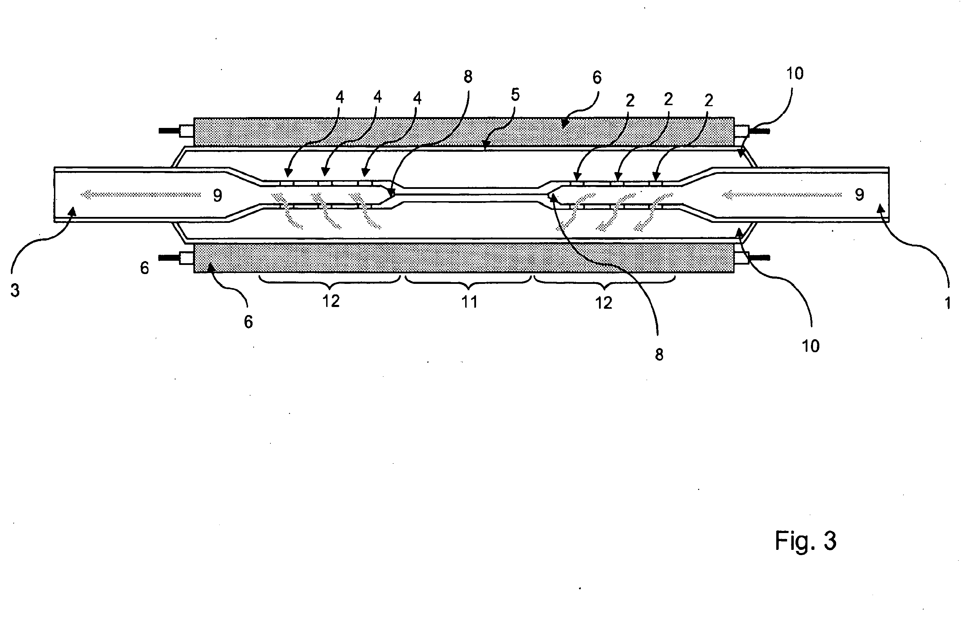

Fig.3 zeigt schematisch einen Querschnitt einer noch weiteren Ausführungsform des erfindungsgemäßen Durchlauferhitzers. Diese Ausführungsform unterscheidet sich von der in Fig.2 dargestellten Ausführungsform nur dadurch, dass Teilabschnitte der beiden Endabschnitte einfach halbverpresst wurden, dergestalt, dass sie ausgehend von dem ursprünglichen Rohrleitungsdurchmesser stufenweise konisch auf den verpressten mittleren Abschnitt (11) der Rohrleitung zulaufen. Diese bevorzugte Ausführungsform hat durch die halbverpressten Endabschnitte (12) ein größeres Mantelrohrvolumen.

Bevorzugt wird der erfindungsgemäße Durchlauferhitzer vertikal hängend oder stehend in einem Heißgetränkeautomaten eingesetzt. Durch diese Art der Verwendung wird der Eintrag von Kalkpartikeln in das wasserzuführende Rohrleitungssystem, dadurch dass die im Wasser suspendierten Partikel geradlinig zum tiefsten Punkt im Mantelrohr sinken, unterbunden. Gleichzeitig wird der Eintrag von langen, dünnen Kalkpartikeln in das nachgelagerte Rohrleitungssystem, dadurch dass die Durchgangsbohrungen orthogonal zur Strömungsrichtung und zur Mantelfläche des Mantelrohrs angeordnet sind, unterbunden.

### Bezugszeichenliste

- 1: wasserzuführendes Rohrleitungsende
- 2: Durchgangsbohrungen
- 3: wasserabführendes Rohrleitungsende
- 4: Durchgangsbohrungen
- 5: Mantelrohr
- 6: Rohrheizkörper
- 7: O-Ring
- 8: Stirnseiten
- 9: Strömungsrichtung des Wassers
- 10: tiefster Punkt im Mantelrohr
- 11: mittleren Abschnitt
- 12: halbverpressten Endabschnitte

## Patentansprüche

1. Pumpenbetriebener, elektrischer Durchlauferhitzer umfassend ein erstes, wasserzuführendes Rohrleitungsende (1) mit Durchgangsbohrungen (2) in der Mantelfläche, ein zweites, wasserabführendes Rohrleitungsende (3) mit Durchgangsbohrungen (4) in der Mantelfläche **dadurch gekennzeichnet, dass** der Durchlauferhitzer ein Mantelrohr (5) aufweist, dessen zumindest mittlerer Abschnitt mit zumindest einem Rohrheizkörper (6) beaufschlagt ist, und dass die Durchgangsbohrungen (2) in der Mantelfläche des ersten, wasserzuführenden Rohrieltungsendes (1) in Richtung der Innenmantelfläche des Mantelrohrs (5) weisen.

2. Durchlauferhitzer nach Anspruch 1, **dadurch gekennzeichnet, dass** die Durchgangsbohrungen (4) in der Mantelfläche des zweiten, wasserabführenden Rohrleitungsendes (3) auf unterschiedlichen Abschnitten des Rohrleitungsendes liegen.

3. Durchlauferhitzer nach Anspruch 1 oder 2, **dadurch gekennzeichnet, dass** das Rohrleitungsende (1) und das Rohrleitungsende (3) über einen dicht oder annähernd dicht verpressten Abschnitt (11) der Rohrleitung verbunden sind.

4. Durchlauferhitzer nach Anspruch 3, **dadurch gekennzeichnet, dass** die Rohrleitungsenden (1, 3) konisch oder stufenweise konisch auf den verpressten Abschnitt der Rohrleitung zulaufen.

5. Durchlauferhitzer nach einem der vorhergehenden Ansprüchen, **dadurch gekennzeichnet, dass** die beiden Mantelrohrenden mit Abschnitten des Außenmantels der Rohrleitungsenden (1, 3) stoffschlüssig verbunden sind.

6. Heißgetränkeautomat mit einem Wasserbehälter oder einer sonstigen Wasserzuführung, einer elektromotorisch angetriebenen Pumpe und einer Getränkepulveraufnahmeeinrichtung, **gekennzeichnet durch** einen Durchlauferhitzer nach Anspruch 1.

7. Heißgetränkeautomat nach Anspruch 8, **dadurch gekennzeichnet, dass** der Durchlauferhitzer vertikal stehend bzw. hängend angebracht ist.

## Claims

1. Pump-operated, electrical instantaneous water heater comprising a first, water-supplying conduit end (1) with through-holes (2) in the peripheral surface, a second, water-discharging conduit end (3) with through-holes (4) in the peripheral surface **characterised in that** the instantaneous water heater has a jacket tube (5), to the at least centre section of which at least one tubular heating body (6) is applied and the through-holes (2) in the peripheral surface of the first, water-supplying conduit end (1) point in the direction of the inner peripheral surface of the jacket tube (5).

2. Instantaneous water heater according to claim 1, **characterised in that** the through-holes (4) in the peripheral surface of the second, water-discharging conduit end (3) are located on different sections of the conduit end.

3. Instantaneous water heater according to claim 1 or 2, **characterised in that** the conduit end (1) and the conduit end (3) are connected by way of a section (11) of the conduit that is compressed in a sealed or essentially sealed manner.

4. Instantaneous water heater according to claim 3, **characterised in that** the conduit ends (1, 3) taper or taper gradually to the compressed section of the conduit.

5. Instantaneous water heater according to one of the preceding claims, **characterised in that** the two jacket tube ends are connected by material to sections of the outer jacket of the conduit ends (1, 3).

6. Automatic hot beverage machine with a water container or another water source, a pump driven by an electric motor and a beverage powder holder, **characterised by** an instantaneous water heater according to claim 1.

7. Automatic hot beverage machine according to claim 8, **characterised in that** the instantaneous water heater is positioned to stand vertically or be suspended.

## Revendications

1. Chauffe-eau instantané électrique, commandé par pompe, comprenant une première extrémité de conduite (1) à amenée d'eau, munie de trous de passage (2) dans la surface de l'enveloppe, une deuxième extrémité de conduite (3) à évacuation d'eau, munie de trous de passage (4) dans la surface de l'enveloppe, **caractérisé en ce que** le chauffe-eau instantané présente un tube de protection (5) dont au moins la section médiane est exposée à au moins un radiateur tubulaire (6), et **en ce que** les trous de passage (2) dans la surface de l'enveloppe de la première extrémité de conduite (1) à amenée d'eau sont tournés en direction de la surface intérieure de l'enveloppe du tube de protection (5).

2. Chauffe-eau instantané selon la revendication 1, **caractérisé en ce que** les trous de passage (4) dans la surface de l'enveloppe de la deuxième extrémité de conduite (3) à évacuation d'eau sont situés sur différentes sections de l'extrémité de conduite.

3. Chauffe-eau instantané selon la revendication 1 ou 2, **caractérisé en ce que** l'extrémité de conduite (1) et l'extrémité de conduite (3) sont reliées par l'intermédiaire d'une section (11) de la conduite pressée de manière dense ou approximativement de manière dense.

4. Chauffe-eau instantané selon la revendication 3, **caractérisé en ce que** les extrémités de conduite (1, 3) convergent de manière conique ou graduellement de manière conique sur la section pressée de la conduite.

5. Chauffe-eau instantané selon l'une quelconque des revendications précédentes, **caractérisé en ce que** les deux extrémités du tube de protection sont reliées par liaison de matière avec des sections de l'enveloppe extérieure des extrémités de conduite (1, 3).

6. Distributeur de boissons chaudes comprenant un réservoir d'eau ou autre, une alimentation en eau, une pompe commandée par moteur électrique et un dispositif de logement de poudre pour boisson, **caractérisé par** un chauffe-eau instantané selon la revendication 1.

7. Distributeur de boissons chaudes selon la revendication 8, **caractérisé en ce que** le chauffe-eau instantané est placé debout resp. de manière suspendue.
